# EUROPÄISCHE PATENTSCHRIFT

(11) **EP 0 353 553 B1**
(45) Veröffentlichungstag und Bekanntmachung des Hinweises auf die Patenterteilung: **20.04.1994**
(21) Anmeldenummer: 89113387.8
(22) Anmeldetag: 21.07.1989
(51) Int. Cl.: F04C 2/107, B29C 69/02, B29C 55/30, B29C 45/14, B29C 67/18

(54) **Verfahren zur Herstellung von Elastomerstatoren für Exzenterschneckenpumpen**
Method of manufacturing stators for eccentric spiral pumps
Procédé de fabrication de stators pour pompes à vis excentrique

(30) Priorität: 30.07.1988 DE 3826033
(43) Veröffentlichungstag der Anmeldung: 07.02.1990
(73) Patentinhaber: GUMMI-JÄGER KG GMBH & CIE, D-30625 Hannover (DE)
(72) Erfinder: Bostel, Karl-Heinz, D-3014 Laatzen 1 (DE)
(74) Vertreter: Depmeyer, Lothar

(56) Entgegenhaltungen:
- EP-A- 0 083 829
- DE-A- 2 930 068
- DE-A- 3 218 714
- DE-A- 3 619 787
- US-A- 3 857 654
- US-A- 4 232 541

## Beschreibung

Die Erfindung betrifft ein Verfahren zur Herstellung von Elastomerstatoren für Exzenterschneckenpumpen, bei denen der Stator einen aus metallischem Werkstoff bestehenden, geschlossenen, hohlzylindrischen Mantel und eine aus elastomerem Werkstoff bestehende Auskleidung aufweist, in der ein Hohlraum für einen Pumpenrotor gebildet ist, wobei der zur Aufnahme des Pumpenrotors dienende Hohlraum des Stators durch Einbringen des elastomeren Werkstoffes in den Mantel mittels eines Kerns abgeformt wird und der elastomere Werkstoff nach dem Abformen schrumpft.

Beim Abformen des Stators wird das Elastomer z.B. durch Einspritzen eingebracht. Nach der Abformung erfolgt dann die Aushärtung des Werkstoffes bzw. die Vulkanisation. Meist kühlt dann der Werkstoff ab; es tritt ein Schrumpf ein, der von mehreren Faktoren u.a. vom Werkstoff selbst abhängig ist.

Aus diesen Gründen ist die Herstellung massgenauer Statoren der obigen Art sehr problematisch; bei einer Änderung des Elastomers bzw. einem Werkstoffwechsel können eng tolerierte Statoren mit wirtschaftlichen Mitteln praktisch kaum verwirklicht werden.

Der Erfindung liegt die Aufgabe zugrunde, ein Herstellungsverfahren für Elastomerstatoren für Exzenterschneckenpumpen vorzuschlagen, das unter den obigen Voraussetzungen eng tolerierte Statoren ermöglicht.

Zur Lösung dieser Aufgabe wird erfindungsgemäß der Hohlraum bei der Fertigung des Stators mit Übermaß abgeformt und durch eine Durchmesserverringerung des geschlossenen, nicht segmentierten Mantels unter bleibender Verformung auf Maß gebracht.

Bewusst wird daher für das Abformen des Stators ein zu dicker Kern benutzt, der einen entsprechend grossen bzw. zu grossen Hohlraum entstehen lässt. Ist dieser Statorkörper abgekühlt und hat sich dessen Schrumpf voll ausgewirkt, wird eine bleibende Verformung des metallischen Statormantels vollzogen. indem sein Durchmesser im gewünschten Masse verringert wird. Dies kann durch Strangziehen z.B. eine ortsfeste Ziehmatrize geschehen. Mit der dabei eintretenden Verformung des Mantels erfolgt eine entsprechende Kompression des vom Mantel umschlossenen Elastomers unter Verkleinerung des Hohlraumes. Durch geeignete Werkzeuge und ggfs. Widerholung oder Wiederholungen der vorgenannten Arbeitsgänge erhält man dann die gewünschten Abmessungen des Hohlraumes innerhalb des Stators. Darüber hinaus kann das Verfahren ggfs. auch zur Nachbearbeitung durch Verschleiss unbrauchbar gewordener Statoren benutzt werden. Dies setzt aber immer einen geschlossenen Statormantel voraus, da nur er die zur Verkleinerung des Hohlraumes benötigten Kräfte ausüben und aufrechterhalten kann.

Es ist an sich bekannt, den Verschleiß durch Spannmanschetten auszugleichen. So ist aus der US-A-3857654 ein Stator für eine Exzenterschneckenpumpe bekannt, dessen Mantel jedoch aus einzelnen Segmenten zusammengesetzt ist. Auf die Segmente wirken von außen Spannmittel ein.

Ein Stator mit einem aus einem zusammenhängenden Stück bestehenden Mantel ist aus der DE-A-2930068 bekannt. Dieser Statormantel weist jedoch über seinen Umfang verteilte, in Richtung seiner Längsachse verlaufende Sicken bzw. Falten auf und ist somit ebenfalls in Segmente unterteilt, um so einen während des Betriebes eingetretenen Verschleiß durch Nachspannen ausgleichen zu können.

Die Erfindung nutzt die Möglichkeit der Durchmesserverringerung geschlossener, nicht in Segmente unterteilter, zylindrischer Metallmäntel und deren Behandlung durch Strangziehen, wobei das Werkzeug gegenüber dem Stator, aber auch der Stator gegenüber dem Werkzeug bewegt werden kann.

Weitere Einzelheiten der Erfindung werden anhand der Zeichnung erläutert, die Verfahrensschritte beispielsweise wiedergibt.

Es zeigen :
- Fig. 1: einen senkrechten Schnitt durch eine Einspritzform zum Abformen von Statoren,
- Fig. 2: eine Ziehmatrize und einen damit bereits teilweise bearbeiteten Stator im senkrechten Schnitt und
- Fig. 3: den Stator im Querschnitt, und zwar in der oberen Hälfte im erkalteten, geschrumpften Zustand im Querschnitt und in der unteren Hälfte im Fertigzustand.

Die hohlzylindrisch ausgeführte Form 1 hat einen zentral angeordneten Kern 2, dessen Aussenkontur dem gewünschten Hohlraum 3 des Stators entspricht, allerdings mit der Massgabe, des er - im Vergleich zum fertigen Stator - einen Hohlraum 3 abformt, der um etwa 0.2- 3 % weiter bzw. grösse ist ( grösserer Durchmesser ).

In bekannter Weise liegt an der Aussenfläche des Formenhohlraumes der aus Stahl bestehende, zylindrische, einstückige, ungeteilte Mantel 4 an. Der zwischen Mantel 4 und dem Kern 2 befindliche Gummi bildet beim fertigen Stator den eigentlichen Statorkörper 5. Der Gummi wird nach dem Einspritzen vulkanisiert und kann sich dann abkühlen, wobei er eine bestimmte, vom Werkstoff abhängige Schrumpfung erfährt.

Das Fertigmass des Stators wird nunmehr durch die genau festzulegende Matrize 6 bestimmt, durch die der Stator in Achsrichtung bewegt hindurchgetrieben wird. Dabei wird der Aussendurchmesser D der Matrize 6 entsprechend verringert. Hiermit entstehen auch im Statorkörper 5 bestimmte Druck- und Radialkräfte, die die Breite B zur kleineren Breite b und die grösseren Radien R zu kleineren Radien r werden lassen. Es kann dabei die Durchmesserverringerung etwa 0.1 - 1.5 % des ursprünglichen Durchmessers D betragen; diese Durchmesserverringerung bildet sich nicht zurück, weil eine bleibende Verformung des Mantels 4 stattgefunden hat.

Die anzuwendende bleibende Verformung und die davon abhängige Durchmesserverringerung muß werkstoffabhängig ermittelt werden. Wichtig ist dabei, dass die Genauigkeit der Durchmesser D nicht so ausschlaggebend ist, weil die zur Aufnahme der Statoren dienenden Futter angeglichen werden können. Sollten also zur Erreichung genauer Innenmasse bei unterschiedlichen Werkstoffen abweichende Aussendurchmesser erforderlich werden, so ergibt sich hierdurch kein Nachteil.

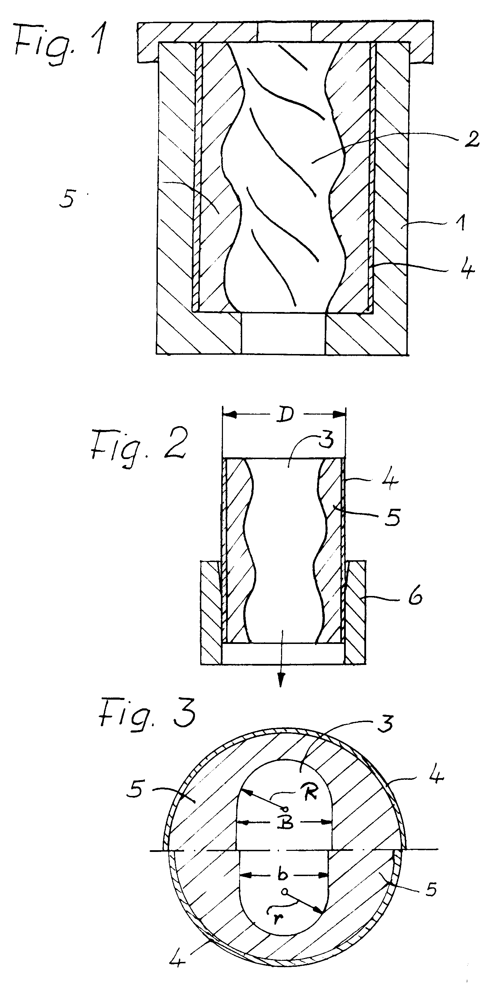

Es sei erwähnt, dass bei der Herstellung der Statoren gemäss Fig. 1 der Statorkörper 5 festhaftend mit der Innenfläche des Mantels 4 verbunden wird. Durch die Geometrie einer Exzenterschneckenpumpe bedingt hat auch der Pumpenhohlraum ( Hohlraum 3 ) eine Gestalt, die ( im Querschnitt gesehen ) von zwei Halbkreisen und einem Rechteck bestimmt sind ( Masse R bzw. r und weiterhin B bzw. b, wobei dann die Breite stets dem doppelten Mass desRadius entspricht.

## Patentansprüche

1. Verfahren zur Herstellung von Elastomerstatoren für Exzenterschneckenpumpen, bei denen der Stator einen aus metallischem Werkstoff bestehenden, geschlossenen, hohlzylindrischen Mantel (4) und eine aus elastomerem Werkstoff bestehende Auskleidung (5) aufweist, in der ein Hohlraum (3) für einen Pumpenrotor gebildet ist, wobei der zur Aufnahme des Pumpenrotors dienende Hohlraum (3) des Stators durch Einbringen des elastomeren Werkstoffes in den Mantel (4) mittels eines Kerns (2) abgeformt wird und der elastomere Werkstoff nach dem Abformen schrumpft, dadurch gekennzeichnet, daß der Hohlraum (3) bei der Fertigung des Stators mit Übermaß abgeformt und durch eine Durchmesserverringerung des geschlossenen, nicht segmentierten Mantels (4) unter bleibender Verformung auf Maß gebracht wird.

2. Verfahren nach Anspruch 1, dadurch gekennzeichnet, dass die Durchmesserverringerung durch Ziehen erfolgt.

3. Verfahren nach Anspruch 2, dadurch gekennzeichnet, dass der Stator dem Ziehvorgang mehrfach unterworfen wird.

4. Verfahren nach Anspruch 1, dadurch gekennzeichnet, dass eine Durchmesserverringerung von etwa 0.1 - 1.5 % erfolgt.

5. Verfahren nach Anspruch 1 - 3, dadurch gekennzeichnet, daß die Durchmesserverringerung um ein solches Maß erfolgt, daß die Innenmaße (R, B) des Hohlraumes (3) um etwa 0,2 - 3 % verkleinert werden.

## Claims

1. Method of producing elastomeric stators for eccentric screw pumps, wherein the stator has a closed, hollow-cylindrical casing (4) formed from metallic material and a lining (5), which is formed from elastomeric material and in which a cavity (3) is formed for a pump rotor, the cavity (3) of the stator serving to accommodate the pump rotor and being shaped by means of a core (2) as a result of the elastomeric material being introduced into the casing (4), and the elastomeric material shrinking after the shaping process, characterised in that the cavity (3) is shaped for the manufacture of the stator with excess material and brought to size by constant deformation as a result of a reduction in diameter of the closed, non-segmented casing (4).

2. Method according to claim 1, characterised in that the reduction in diameter is effected by drawing.

3. Method according to claim 2, characterised in that the stator is subjected to the drawing process repeatedly.

4. Method according to claim 1, characterised in that a reduction in diameter of about 0.1 - 1.5 % is effected.

5. Method according to claims 1 to 3, characterised in that the reduction in diameter is effected to such an extent that the internal dimensions (R, B) of the cavity (3) are reduced by about 0.2 - 3 %.

## Revendications

1. Procédé de fabrication de stators en élastomère pour des pompes à vis excentrée, dans lesquelles le stator comporte une enveloppe (4) cylindrique, creuse, fermée et en un matériau métallique, et un garnissage (5) en un matériau élastomère et dans lequel est formée une cavité (3) pour un rotor de pompe, en forme la cavité (3) du stator, destinée à recevoir le rotor de la pompe, étant moulée, à l'aide d'un noyau (2), par introduction du matériau élastomère dans l'enveloppe (4) et le matériau élastomère se contractant après le moulage, caractérisé en ce qu'on moule la cavité (3) avec une surcote lors de la fabrication du stator et on l'amène à la cote, avec déformation permanente, en diminuant le diamètre de l'enveloppe (4) fermée et non segmentée.

2. Procédé suivant la revendication 1, caractérisé en ce qu'on diminue le diamètre par étirage.

3. Procédé suivant la revendication 2, caractérisé en ce qu'on soumet le stator plusieurs fois à l'opération d'étirage.

4. Procédé suivant la revendication 1, caractérisé en ce qu'on effectue une diminution de diamètre d'environ 0,1 à 1,5 %.

5. Procédé suivant les revendications 1-3, caractérisé en ce que qu'on effectue la diminution de diamètre d'une valeur telle que les cotes intérieures (R, B) de la cavité (3) sont rapetissées d'environ 0,2 à 3 %.
